# EUROPEAN PATENT SPECIFICATION

(11) **EP 2 743 213 B1**
(45) Date of publication and mention of the grant of the patent: **18.10.2017**
(21) Application number: 13189970.0
(22) Date of filing: 23.10.2013
(51) Int. Cl.: B65F 1/14, G06Q 10/08, H04L 9/32

(54) **System and method to validate a garbage container**
System und Verfahren zur Validierung eines Müllbehälters
Système et procédé pour valider un conteneur à ordures

(30) Priority: 23.10.2012 IT TV20120201
(43) Date of publication of application: 18.06.2014
(73) Proprietor: Altinier, Corrado, Godega di Sant'Urbano (IT); Montanari, Ubaldo, Castel Maggiore (IT); Neglia, Lorenzo, Castano Primo (IT)
(72) Inventor: Altinier, Corrado, Godega di Sant'Urbano (IT); Montanari, Ubaldo, Castel Maggiore (IT); Neglia, Lorenzo, Castano Primo (IT)
(74) Representative: Zamprogno, Bruno

(56) References cited:
- EP-A1- 1 842 802
- EP-A1- 2 377 779
- WO-A1-2009/052059
- WO-A2-2006/012997
- KR-A- 20120 076 699
- US-A1- 2011 283 233

## Description

The present invention relates to a system and method to validate a garbage container.

It is known the need felt by urban garbage collection consortiums to identify and validate, with a given reliability, garbage containers conferred by users, so as to exactly determine the number of garbage conferrals carried out by each user within a pre-defined time interval.

To this end, a system has been created for identifying garbage containers where it is intended to install/integrate, in the containers, respective RFID (Radio Frequency Identification) transponders containing corresponding identification codes, each of which is unambiguously associated with a user. During the garbage conferral, the garbage collection operator reads the identification code contained in the transponder of the container intended to be emptied, by means of an apparatus for reading RFID transponders, which reads and stores the identification code. The identification codes stored in the reader apparatus are then communicated by the latter to a central station which determines the number of garbage conferrals carried out by each user, on the basis of the user identification codes received.

The above-described system for identifying garbage containers has various technical problems.

Firstly, the above-described system does not allow a given level of certainty to be reached in identifying the containers because the transponders are subject to the falsification of the identification code. In particular, the identification code used in the above-described systems typically corresponds to the manufacturer's identification code, which is stored by the manufacturer in the transponder in order to identify it. Thus, due to current technologies, it is possible to read the identification code of a garbage container in a simple and affordable manner, and to fraudulently replicate it as desired in other transponders intended to be then integrated in garbage containers.

Furthermore, the above-described system does not allow the operator to validate the container with given certainty. In other words, the system does not allow an "irregular" condition of the garbage collection in the container to be immediately identified due, for example, to the conferral of an incorrect type of garbage, and/or to the presence of a transponder with a false identification code and/or to the conferral of a container in an improper collection area.

KR 2012 0076699 A discloses a forgery proof garbage bag and a forgery discriminating device to determinate forgery in the field wherein a barcode information indicated by a visible barcode is certified with encoded invisible authentication information indicated by a RFID tag. A forgery proof garbage bag comprises a visible barcode and a RFID tag. The visible barcode has information related to manufacture. The RFID tag has invisible authentication information for certifying the barcode.

The Applicant has carried out an in-depth research on systems for identifying garbage containers with the purpose of identifying a solution which allows the following objectives to be specifically achieved:
- increasing the certainty of the identification of garbage containers when they are collected; and
- allowing the container to be validated so as to promptly signal any "irregular collection" conditions to the operator when the collection is being carried out.

Therefore, it is the object of the present invention to provide an available solution which allows the above objectives to be achieved.

This object is achieved by the present invention, as defined in claims 1 and 10, because it relates to a system and method to validate a garbage container as defined in the appended claims.

The present invention will now be described with reference to the accompanying drawings, which illustrate a non-limiting embodiment thereof, in which:
- figure 1 is a schematic view of a system to validate a garbage container during an operating validation step, made according to the dictates of the present invention;
- figure 2 is a schematic view of a system to validate a garbage container, in an operating code-writing step, made according to the dictates of the present invention;
- figures 3 and 4 shows as many flow charts of the operations carried out by the system during the writing and validation steps, respectively, of the garbage containers, according to the present invention.

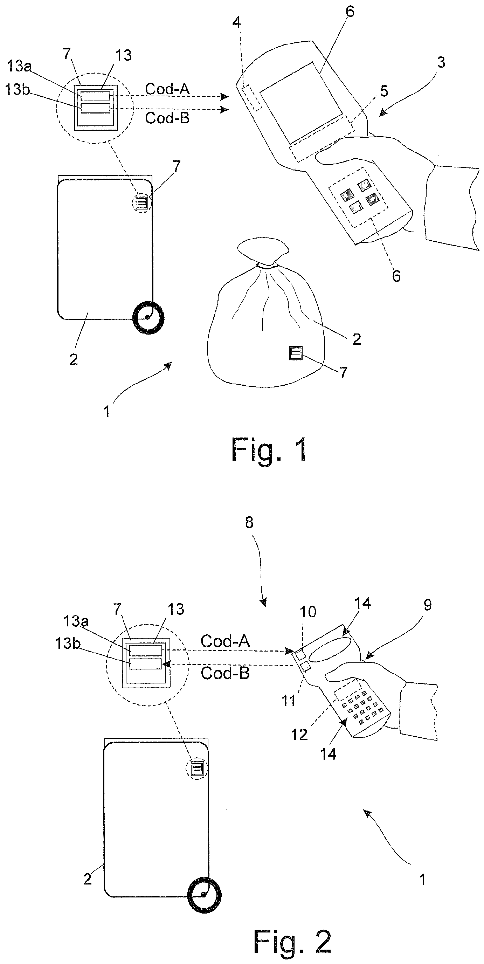

With reference to figures 1 and 2, numeral 1 indicates as a whole a system to validate garbage containers, which comprises a plurality of garbage containers 2 each of which is provided with a public code Cod-A and with a private code Cod-B encrypted by means of a pre-defined encryption algorithm.

The garbage containers 2 could preferably comprise bags, and/or garbage cans/dustbin, and/or bell-shaped containers, and/or bulk garbage containers, and/or any other type of known similar container structured to contain garbage.

The system to validate garbage containers 1 also comprises an apparatus to validate containers 3, which is structured to be preferably, but not necessarily, used by the garbage collection operator and comprises: a device 4 for reading the container codes, configured to read the public code Cod-A and the encrypted private code Cod-B present in container 2; and an electronic processing unit 5, which is configured to: receive the public code Cod-A and the encrypted private code Cod-B, and decrypt the private code Cod-B based on the public code Cod-A so as to determine the decrypted private code Cod-B.

The electronic processing unit 5 is also configured to compare the decrypted private code Cod-B with the public code Cod-A so as to verify whether the decrypted private code Cod-B and the public code Cod-A satisfy a pre-defined relationship together.

The private code Cod-B may preferably comprise an alphanumeric string containing a plurality of information data on the garbage collection carried out by means of container 2 which are indicative, for example, of the following information: public code Cod-A, and/or type of container (bell-shaped container, roadside bulk garbage container, individual bulk garbage container, bag), and/or volume capacity of the container, and/or type of garbage intended for storage in the container (mixed, dry, wet, paper, plastic), and/or geographical location of the container (municipality, province, region), and/or the garbage collection consortium/firm designed to manage the garbage collection by means of said container 2 (company code, consortium municipality, local integrated services boards), and/or client/user data (client code).

According to a preferred embodiment, the electronic processing unit 5 is further configured to warn/signal the condition of non-validation of container 2 when the decrypted private code Cod-B and the public code Cod-A do not satisfy the pre-defined control relationship together or, alternatively, a condition of validation/identification of container 2 when the control relationship has been satisfied by them.

The electronic processing unit 5 is preferably, but not necessarily, configured to execute a control algorithm, which could verify whether the string associated with the private code Cod-B contains the public code Cod-A. The control relationship may preferably be satisfied, for example, when the control algorithm determines that the string associated with the private code Cod-B contains the public code Cod-A.

It should be understood that the control algorithm could be configured differently from the above disclosure and carry out other types of checks to determine whether the private code Cod-B and the public code Cod-A satisfy the control relationship together. For example, the control algorithm may perform/implement: pre-defined mathematical operations on the private code Cod-B and on the public code Cod-A to determine numeric control values and carry out mathematical operations on the numeric control values so as to calculate a final control value. In this case, the pre-defined control relationship may be satisfied when the final control value corresponds to a pre-defined value, or when the numeric control values are equal to each other, or satisfy a certain mathematical equation, etc.

The warning/signalling of the container validation or the signalling of the non-validation thereof may preferably be carried out by system 1 in an audio and/or visual manner. To this end, the apparatus to validate containers 3 may be provided with user-interface means 6 comprising devices for reproducing sound/vocal messages and/or displays structured so as to warn/signal the validation or non-validation of container 2, and/or command/data input devices (keyboards, pushbuttons and the like).

According to a preferred embodiment shown in figure 1, system 1 may comprise, for each container 2, an RFID transponder 7 configured to contain the public code Cod-A and the private code Cod-B.

Transponder 7 is a known device and for this reason it will not be further described except to clarify that it may be of the active or passive or semiactive type and comprises an antenna (not shown), and a memory 13 having at least one read-only, non-rewritable memory area 13a containing the public code Cod-A, and at least one rewritable memory area 13b containing the private code Cod-B. The non-rewritable memory area 13a may preferably correspond to the "fixed" memory area designed by the manufacturer of transponder 7 to contain the manufacturer's identification code which unambiguously identifies transponder 7.

According to a preferred embodiment, transponder 7 may correspond to an LF transponder, operating at a frequency ranging from about 120 to 150 Khz, and/or an HF transponder operating at a frequency of about 13.56 Mhz, and/or a UHF transponder operating at a frequency ranging from about 868 to 2400 MHz.

With reference to figure 2, the system to validate container 1 may also comprise a writing system 8, configured to determine and write the private code Cod-B in transponder 7 before carrying out any operation for validating container 2.

According to a possible embodiment shown in figure 2, the writing system 8 may be provided with a writing apparatus 9 preferably comprising: a reading module 10 designed to read the public code Cod-A present in the memory area 13a of transponder 7, a writing module 11 configured so as to write/store the encrypted private code Cod-B in the memory area 13b of transponder 7, and a processing module 12, which is configured to control the writing module 11 and/or the reading module 10 during their operation.

It is worth noting from the above disclosure that according to a possible variant, the writing apparatus 9 and the apparatus to validate containers 3 may be integrated/incorporated together so as to form a single apparatus (not shown) designed to perform both the writing and/or validation functions.

According to a possible embodiment, the processing module 12 is configured to: determine the private code Cod-B according to the above-listed information data (intended to be entered in the alphanumeric string), encrypt the private code Cod-B by means of an encryption algorithm based on the public code Cod-A read, and finally command the writing module 11 to write the private code Cod-B in the memory area 13b of transponder 7.

The writing apparatus 9 may preferably be provided with a user interface 14 comprising, for example, a command keyboard through which the user enters data and controls functions which may be executed by the writing apparatus 9 and/or a display designed to display the performed/implemented operations.

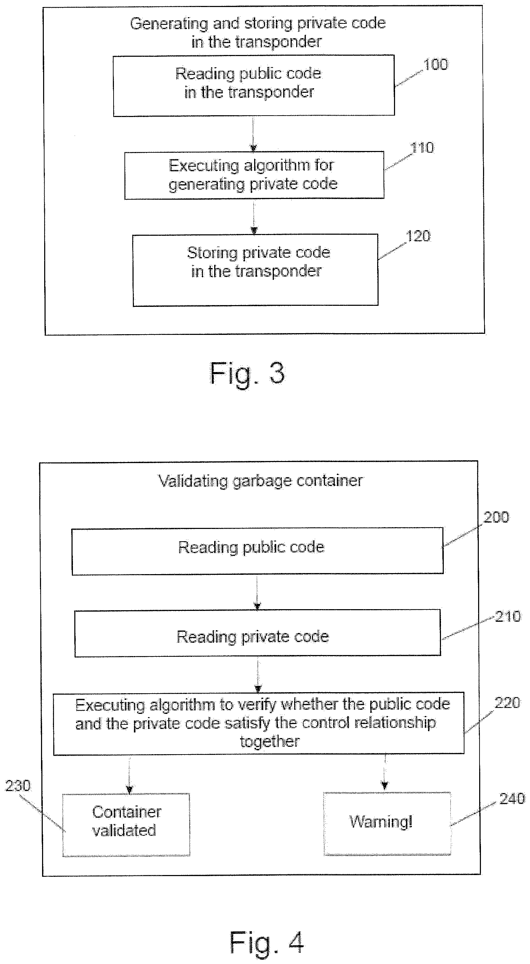

With reference to figures 3 and 4, the operations carried out by system 1 (or by the method) during a procedure/step of writing the private code Cod-B (figure 3) and during a procedure/step of validating container 2 (figure 4) will be described below.

With reference to figure 3, during the writing step, system 1 (method) reads, by means of the writing apparatus 9, the public code Cod-A present in the transponder 7 of container 2, receives the input information data (block 100) preferably supplied by the user via the user interface 14, determines the private key Cod-B according to the information data and the public key Cod-A, executes the encryption algorithm so as to encrypt the private key Cod-B based on the public key Cod-A (block 110), executes the writing/storing of the encrypted private key Cod-B in the memory area 13b of transponder 7 (block 120).

Preferably, system 1 (method) may also be configured to irreversibly write/store the private key Cod-B in the memory area 13b so as to block/prevent any successive rewriting/modification thereof.

With reference to figure 4, during the validation step, system 1 (method) reads, by means of the apparatus to validate containers 3, the public code Cod-A (block 200) and the encrypted private code Cod-B (block 210) contained in the transponder 7 of container 2, decrypts the private code Cod-B according to the public code Cod-A, executes a control algorithm to compare the private code Cod-B decrypted with the public code Cod-A so as to verify whether the decrypted private code Cod-B and the public code Cod-A satisfy a pre-defined control relationship together (block 220).

For example, the pre-defined control relationship may be satisfied when the alphanumeric string that defines the private code Cod-B contains the public code Cod-A in a specific position within the string.

System 1 (method) warns/signals, by means of the apparatus to validate containers 3, a condition of non-validation of the container when the control relationship is not satisfied by the public Cod-A and private codes Cod-B, e.g. when the string of the private code Cod-B does not contain the public code Cod-A (block 240) .

In contrast, system 1 (method) signals, by means of the apparatus to validate containers 3, a condition of validation of the container when the control relationship between the private code Cod-B and the public code Cod-A is satisfied (block 230).

The above-described system 1 has the advantage of promptly signalling, to the operator, an irregular condition associated with a container 2 without requiring the storage of a massive quantity of data in the apparatus to validate container 3. In other words, by virtue of the above-described method, in the regular step of using the containers, the validation apparatus does not need to have the container collection codes stored therein, but only needs the logic to exclude those codes from reading which are close but not pertinent to the collection itself, or to be able to identify counterfeit or false codes.

Furthermore, the above-described system has the advantage of increasing the certainty of the validation of garbage containers when they are collected.

Finally, it is apparent that modifications and variants may be made to the above-described system and method as set-forth in the claims and without departing from the scope of the appended claims. In particular, according to a possible variant (not shown) of the present invention, the system may differentiate from the above-described system 1 because it replaces transponders 7 with barcodes associated with (fixed by means of supports - labels - or printed on) the containers 2, and each containing the public code Cod-A and the private code Cod-B.

The system preferably allows the public code Cod-A and the private code Cod-B to be encoded in a two-dimensional barcode.

The system according to the variant preferably allows the code reading device of the apparatus for validating containers 3 to be configured to read barcodes, preferably of the two-dimensional type.

The system according to the variant preferably allows the reading module of the writing system 8 to be configured to read barcodes, preferably of the two-dimensional type.

The system according to the variant preferably allows the writing module of the writing system to be configured to write barcodes, for example of the two-dimensional type, on container 2 or on a medium, for example a label which can be affixed to the container.

The writing module of the writing system may preferably comprise, for example, a device for printing a barcode of known type, such as for example a laser printing system, or an inkjet printing system, or a dot matrix system, or a heat transfer system.

## Claims

1. System to validate garbage containers (1) **characterised in that** it comprises:
a plurality of garbage containers (2) each provided with a public code (Cod-A) and an encrypted private code (Cod-B), which is determined on the basis of information data of the garbage collection carried out via said container (2), and is encrypted on the basis of said public code (Cod-A); said public code (Cod-A) and said encrypted private code (Cod-B) being contained in a correspondent transponder (7) associated with each container (2), or being contained in a barcode associated with each container (2);
at least one apparatus for validating the garbage containers (3) comprising:
- a reader device (4) configured to read the public code (Cod-A) and the encrypted private code (Cod-B) present in each said container (2); and
- a processing unit (5), which is configured to: receive said public code (Cod-A) and said encrypted private code (Cod-B); decrypt the private code (Cod-B) based on the public code (Cod-A); compare the decrypted private code (Cod-B) with said public code (Cod-A), and verifying whether the decrypted private code (Cod-B) and the public code (Cod-A) satisfy between them a pre-defined control relationship; signal a condition of non-validation of the container (2) when said control relationship is not satisfied.

2. System according to claim 1, wherein said transponder (7) comprises memory means (13) configured to have a non-rewritable memory area (13a) containing said public code (Cod-A), and a rewritable memory area (13b) containing said private code (Cod-B).

3. System according to any one of the previous claims comprising writing means (8) configured to: determine the private code (Cod-B) on the basis of said information data, encrypt the private code (Cod-B) on the basis of said public code (Cod-A), and associate the private code (Cod-B) and the public code (Cod-A) with said garbage container (2).

4. System according to claims 2 and 3, wherein said writing means (9) comprises: a reading module (10) designed to read the public code (Cod-A) present in the non-rewritable memory area (13a) of transponder (7), a writing module (11) configured so as to write/store the encrypted private code (Cod-B) in the rewritable memory area (13b) of transponder (7), and a processing module (12), which is configured to control the writing module (11) and/or the reading module 10 during their operation.

5. System according to claim 4, wherein said writing means (9) and said apparatus to validate containers (3) are integrated/incorporated together so as to form a single apparatus designed to perform both the writing and/or validation functions.

6. System according to any one of the previous claims, wherein said information data comprise information associated with: said public code (Cod-A), and/or the type of container (2), and/or the volumetric capacity of the container (2), and/or the type of garbage intended for storage in the container (2), and/or the geographical location of the container (2), and/or the garbage collection consortium/firm designed to manage the garbage collection via said container (2), and/or the data identifying the user of the container (2).

7. System according to claim 4 and 6, wherein said processing module (12) is configured to: determine the private code (Cod-B) according to said information data, encrypt the private code (Cod-B) by means of an encryption algorithm based on the public code (Cod-A) read, and finally command the writing module (11) to write the private code (Cod-B) in the rewritable memory area (13b) of transponder (7).

8. System according to claim 2, wherein said non-rewritable memory area (13a) correspond to the fixed memory area designed by the manufacturer of transponder (7) to contain the manufacturer's identification code which unambiguously identifies the transponder (7).

9. System according to any of the previous claims, wherein said transponder (7) corresponds to an LF transponder, operating at a frequency ranging from about 120 to 150 Khz, or an HF transponder operating at a frequency of about 13.56 Mhz, or a UHF transponder operating at a frequency ranging from about 868 to 2400 MHz.

10. Method for validating garbage containers (2) **characterised in that** it comprises the steps of:
- establishing a public code (Cod-A);
- determining a private code (Cod-B) on the basis of information data of the garbage collection carried out via a container (2);
- encrypting the private code (Cod-B) on the basis of said public code (Cod-A);
- associating with each container (2) a transponder (7) containing said public code (Cod-A) and said encrypted private code (Cod-B), or
- encoding said public code (Cod-A) and said encrypted private code (Cod-B) in a barcode and associating the barcode with said container (2);
and during validation of a container (2):
- reading the public code (Cod-A) and the encrypted private code (Cod-B) present in said container (2);
- decrypt the private code (Cod-B) based on the public code (Cod-A);
- compare the decrypted private code (Cod-B) with said public code (Cod-A), and verifying whether the decrypted private code (Cod-B) and the public code (Cod-A) satisfy between them a pre-defined control relationship;
- signalling a non-validation condition of the container (2) when said predefined relationship of control is not satisfied.

11. Method as claimed in claim 10, comprising the step of storing said public code (Cod-A) and said private code (Cod-B) in a non-rewritable memory area (13a) and a rewritable memory area (13b) respectively of memory means (13) of said transponder (7).

12. Method according to claim 10, comprising the step of: irreversibly writing/store the private code (Cod-B) in the rewritable memory area (13b) so as to block/prevent any successive rewriting/modification thereof.

13. Method according to any of the claims from 10 to 12, wherein said private code (Cod-B) comprises an alphanumeric string comprising information data indicative of said public code (Cod-A), and/or the type of container (2), and/or the volumetric capacity of the container (2), and/or the type of garbage intended for storage in the container (2), and/or the geographical location of the container (2), and/or the garbage collection consortium/firm designed to manage the garbage collection via said container (2), and/or the data identifying the user of the container (2).

14. Method according to any of the claims from 10 to 13, comprising: determining the private code (Cod-B) according to said information data, encrypting the private code (Cod-B) by means of an encryption algorithm based on the public code (Cod-A) read, and finally writing the private code (Cod-B) in the memory area (13b) of transponder (7).

## Patentansprüche

1. System zur Validierung von Müllbehältern (1), **dadurch gekennzeichnet dass** es umfasst:
eine Vielzahl von Müllbehältern (2), von denen jeder mit einem öffentlichen Schlüssel (Cod-A) und einem chiffrierten privaten Schlüssel (Cod-B) versehen ist, welcher auf der Grundlage von Informationsdaten der mit dem Behälter (2) durchgeführten Müllsammlung bestimmt ist und auf der Grundlage des öffentlichen Schlüssel (Cod-A) chiffriert ist; wobei der öffentliche Schlüssel (Cod-A) und der chiffrierte private Schlüssel (Cod-B) in einem diesbezüglichen Transponder (7) enthalten ist, der mit jedem Behälter (2) verbunden ist oder in einem mit jedem Behälter (2) verbundenen Strichcode enthalten ist;
mindestens eine Vorrichtung (3) zum Validieren der Müllbehälter, umfassend:
- ein Lesegerät (4), das dazu konfiguriert ist, den in jedem Behälter (2) vorhandenen öffentlichen Schlüssel (Cod-A) und den chiffrierten privaten Schlüssel (Cod-B) auszulesen; und
- eine Verarbeitungseinheit (5), die dazu konfiguriert ist: den öffentlichen Schlüssel (Cod-A) und den chiffrierten privaten Schlüssel (Cod-B) zu empfangen; den privaten Schlüssel (Cod-B) auf der Grundlage des öffentlichen Schlüssels (Cod-A) zu dechiffrieren; den dechiffrierten privaten Schlüssel (Cod-B) mit dem öffentlichen Schlüssel (Cod-A) zu vergleichen und zu verifizieren, ob der dechiffrierte private Schlüssel (Cod-B) und der öffentliche Schlüssel (Cod-A) untereinander eine vordefinierte Kontrollbeziehung erfüllen; Melden eines Zustands der Nichtvalidierung des Behälters (2), wenn die Kontrollbeziehung nicht erfüllt ist.

2. System gemäß Anspruch 1, wobei der Transponder (7) Speichervorrichtungen (13) umfasst, die dazu konfiguriert sind, ein nicht wiederbeschreibbares Speichergebiet (13a) zu umfassen, welches den öffentlichen Schlüssel (Cod-A) enthält, sowie ein wiederbeschreibbares Speichergebiet (13b), welches den privaten Schlüssel (Cod-B) enthält.

3. System gemäß irgendeinem der vorhergehenden Ansprüche, umfassend eine Schreibvorrichtung (8), die dazu konfiguriert ist: Bestimmen des privaten Schlüssels (Cod-B) auf der Grundlage der Informationsdaten, chiffrieren des privaten Schlüssels (Cod-B) auf der Grundlage des öffentlichen Schlüssels (Cod-A), und Verbinden des privaten Schlüssels (Cod-B) und des öffentlichen Schlüssels (Cod-A) mit dem Müllbehälter (2).

4. System gemäß den Ansprüchen 2 und 3, wobei die Schreibvorrichtung (9) umfasst: ein Lesemodul (10), das dazu ausgestaltet ist, den in dem nicht wiederbeschreibbaren Speichergebiet (13a) des Transponders (7) vorhandenen öffentlichen Schlüssel (Cod-A) auszulesen, ein Schreibmodul (11), das dazu konfiguriert ist, den chiffrierten privaten Schlüssel (Cod-B) in dem wiederbeschreibbaren Speichergebiet (13b) des Transponders (7) zu beschreiben/zu speichern, sowie ein Verarbeitungsmodul (12), welches dazu konfiguriert ist, das Schreibmodul (11) und/oder das Lesemodul (10) bei deren Betrieb zu steuern.

5. System gemäß Anspruch 4, wobei die Schreibvorrichtung (9) und das Gerät zum Validieren von Behältern (3) miteinander integriert/inkorporiert sind, um ein einziges Gerät zu bilden, das dazu ausgestaltet ist, sowohl die Schreib- als auch die Validationsfunktion auszuführen.

6. System gemäß irgendeinem der vorhergehenden Ansprüche, wobei die Informationsdaten Information umfassen, die gehört zu: dem öffentlichen Schlüssel (Cod-A) und/oder der Art des Behälters (2), und/oder der volumetrischen Kapazität des Behälters (2) und/oder der Art des Mülls, die in dem Behälter (2) aufbewahrt werden soll, und/oder dem geographischen Ort des Behälters (2) und/oder der Müllsammlungs-Vereinigung bzw. der Müllsammelfirma, die dazu bestimmt ist, die Müllsammlung mittels des Behälters (2) zu bewerkstelligen, und/oder den Daten, die den Verwender des Behälters (2) identifizieren.

7. System gemäß Anspruch 4 und 6, wobei das Verarbeitungsmodul (12) konfiguriert ist zum: Bestimmen des privaten Schlüssels (Cod-B) gemäß den Informationsdaten, Chiffrieren des privaten Schlüssels (Cod-B) mittels eines Chiffrierungsalgorithmus auf der Grundlage des ausgelesenen öffentlichen Schlüssels (Cod-A), und endlich Anweisen des Schreibmoduls (11), den privaten Schlüssel (Cod-B) in das wiederbeschreibbare Speichergebiet (13b) des Transponders (7) zu schreiben.

8. System gemäß Anspruch 2, wobei das nicht wiederbeschreibbare Speichergebiet (13a) dem von dem Hersteller des Transponders (7) entworfenen, fest eingebauten Speichergebiet entspricht, um den Identifikationscode des Herstellers zu enthalten, welcher den Transponder (7) eindeutig identifiziert.

9. System gemäß irgendeinem der vorhergehenden Ansprüche, wobei der Transponder (7) einem mit einer Frequenz im Bereich von etwa 120 bis 150 Khz arbeitenden LF-Transponder entspricht, oder einem mit einer Frequenz von etwa 13,56 Mhz arbeitenden HF-Transponder oder einem mit einer Frequenz im Bereich von etwa 868 bis 2400 Mhz arbeitenden UHF-Transponder.

10. Verfahren zur Validierung von Müllbehältern (2), **dadurch gekennzeichnet, dass** es die Schritte umfasst von :
- Herstellen eines öffentlichen Schlüssels (Cod-A);
- Bestimmen eines privaten Schlüssels (Cod-B) auf der Grundlage von Informationsdaten der mit einem Behälter (2) durchgeführten Müllsammlung;
- Chiffrieren des privaten Schlüssels (Cod-B) auf der Grundlage des öffentlichen Schlüssels (Cod-A);
- Verbinden eines den öffentlichen Schlüssel (Cod-A) und den chiffrierten privaten Schlüssels (Cod-B) enthaltenden Transponders (7) mit jedem Behälter (2), oder
- Codieren des öffentlichen Schlüssels (Cod-A) und des chiffrierten privaten Schlüssels (Cod-B) in einem Barcode und Verbinden des Barcodes mit dem Behälter (2); und während der Validierung eines Behälters (2):
- Auslesen des in dem Behälter (2) vorhandenen öffentlichen Schlüssels (Cod-A) und des chiffrierten privaten Schlüssels (Cod-B);
- Dechiffrieren des privaten Schlüssels (Cod-B) auf der Grundlage des öffentlichen Schlüssels (Cod-A);
- Vergleichen des dechiffrierten privaten Schlüssels (Cod-B) mit dem öffentlichen Schlüssel (Cod-A) und verifizieren, ob der dechiffrierte private Schlüssel (Cod-B) und der öffentliche Schlüssel (Cod-A) untereinander eine vordefinierte Kontrollbeziehung erfüllen;
- Melden eines Zustands der Nichtvalidierung des Behälters (2), wenn die vordefinierte Kontrollbeziehung nicht erfüllt ist.

11. Verfahren gemäß Anspruch 10, umfassend den Schritt des Speicherns des öffentlichen Schlüssels (Cod-A) und des privaten Schlüssels (Cod-B) in einem nicht wiederbeschreibbaren Speichergebiet (13a) beziehungsweise einem wiederbeschreibbaren Speichergebiet (13b) von Speichermitteln (13) des Transponders (7).

12. Verfahren gemäß Anspruch 10, umfassend den Schritt des: irreversiblen Schreibens/Speicherns des privaten Schlüssels (Cod-B) in dem wiederbeschreibbaren Speichergebiet (13b), so dass jegliche darauf folgende Überschreibung/Abwandlung davon blockiert/verhindert wird.

13. Verfahren gemäß irgendeinem der Ansprüche von 10 bis 12, wobei der private Schlüssel (Cod-B) eine alphanumerische Zeichenfolge umfasst, die Informationsdaten umfasst, die indikativ sind für den öffentlichen Schlüssel (Cod-A) und/oder die Art des Behälters (2), und/oder die volumetrischen Kapazität des Behälters (2) und/oder die Art des Mülls, die in dem Behälter (2) aufbewahrt werden soll, und/oder den geographischen Ort des Behälters (2) und/oder die Müllsammlungs-Vereinigung bzw. die Müllsammelfirma, die dazu bestimmt ist, die Müllsammlung mittels des Behälters (2) zu bewerkstelligen, und/oder die Daten, die den Verwender des Behälters (2) identifizieren.

14. Verfahren gemäß irgendeinem der Ansprüche von 10 bis 13, umfassend: Bestimmen des privaten Schlüssels (Cod-B) gemäß den Informationsdaten, Chiffrieren des privaten Schlüssels (Cod-B) mittels eines Chiffrierungsalgorithmus auf der Grundlage des ausgelesenen öffentlichen Schlüssels (Cod-A), und endlich Schreiben des privaten Schlüssels (Cod-B) in dem Speichergebiet (13b) des Transponders (7).

## Revendications

1. Système de validation de bac à ordures (1), **caractérisé en ce qu'**il comprend :
plusieurs bacs à ordures (2), chacun pourvu d'un code public (Cod-A) et d'un code privé crypté (Cod-B), qui est déterminé à partir de données d'information de collecte d'ordures réalisée au moyen dudit bac (2) et est crypté à partir dudit code public (Cod-A) ; ledit code public (Cod-A) et ledit code privé crypté (Cod-B) étant contenus dans un transpondeur correspondant (7) associé à chaque bac (2) ou étant contenu dans un code-barres associé à chaque bac (2) ;
au moins un appareil de validation des bacs à ordures (3) comprenant :
- un lecteur (4) configuré pour lire le code public (Cod-A) et le code privé crypté (Cod-B) présents dans chaque bac (2) ; et
- un processeur (5) configuré pour : recevoir ledit code public (Cod-A) et ledit code privé crypté (Cod-B) ; décrypter le code privé (Cod-B) à partir du code public (Cod-A) ; comparer le code privé décrypté (Cod-B) avec ledit code public (Cod-A) et vérifier si le code privé décrypté (Cod-B) et le code public (Cod-A) satisfont entre eux une relation de contrôle prédéfinie ; signaler un état d'absence de validation du bac (2) quand ladite relation de contrôle n'est pas satisfaite.

2. Système selon la revendication 1, dans lequel ledit transpondeur (7) comprend des moyens de mémoire (13) configurés pour présenter une ,zone mémoire non réinscriptible (13a) contenant ledit code public (Cod-A) et une zone mémoire réinscriptible (13b) contenant ledit code privé (Cod-B).

3. Système selon l'une quelconque des revendications précédentes comprenant des moyens d'écriture (8) configurés pour : déterminer le code privé (Cod-B) à partir desdites données d'information, crypter le code privé (Cod-B) à partir dudit code public (Cod-A) et associer le code privé (Cod-B) et le code public (Cod-A) audit bac à ordures (2).

4. Système selon les revendications 2 et 3, dans lequel ledit moyen d'écriture (9) comprend : un module de lecture (10) conçu pour lire le code public (Cod-A) présent dans la zone mémoire non-réinscriptible (13a) du transpondeur (7), un module d'écriture (11) configuré pour écrire/stocker le code privé crypté (Cod-B) dans la zone mémoire réinscriptible (13b) du transpondeur (7) et un module de traitement (12) qui est configuré pour commander le module d'écriture (11) et/ou le module de lecture (10) lors de leur fonctionnement.

5. Système selon la revendication 4, dans lequel ledit moyen d'écriture (9) et ledit appareil de validation des bacs (3) sont intégrés/ incorporés ensemble pour former un appareil unique conçu pour réaliser à la fois les fonctions d'écriture et/ou de validation.

6. Système selon l'une quelconque des revendications précédentes, dans lequel lesdites données d'information comprennent des informations associées : audit code public (Cod-A) et/ou au type de bac (2), et/ou à la capacité volumétrique du bac (2) et/ou au type de déchets prévus pour être stockés dans le bac (2) et/ou à l'emplacement géographique du bac (2) et/ou au consortium/société de collecte d'ordures prévu pour gérer la collecte des ordures au moyen dudit bac (2) et/ou aux données identifiant l'utilisateur du bac (2).

7. Système selon les revendications 4 et 6, dans lequel ledit module de traitement (12) est configuré pour : déterminer le code privé (Cod-B) en fonction desdites données d'information, crypter le code privé (Cod-B) au moyen d'un algorithme de cryptage à partir du code public (Cod-A) lu et, pour finir, commander le module d'écriture (11) pour écrire le code privé (Cod-B) dans la zone mémoire réinscriptible (13b) du transpondeur (7).

8. Système selon la revendication 2, dans lequel la zone mémoire non réinscriptible (13a) correspond à la zone mémoire fixe conçue par le fabricant du transpondeur (7) pour contenir le code d'identification du fabricant qui permet d'identifier sans ambiguïté le transpondeur (7).

9. Système selon l'une quelconque des revendications précédentes, dans lequel ledit transpondeur (7) correspond à un transpondeur LF, fonctionnant à une fréquence comprise entre environ 120 et 150 kHz, ou un transpondeur HF fonctionnant à une fréquence d'environ 13,56 MHz ou un transpondeur UHF fonctionnant à une fréquence comprise entre environ 868 et 2400 MHz.

10. Procédé de validation de bacs à ordures (2), **caractérisé en ce qu'**il comprend les étapes suivantes :
- établir un code public (Cod-A) ;
- déterminer un code privé (Cod-B) à partir de données d'information de collecte d'ordures réalisée au moyen d'un bac (2) ;
- crypter le code privé (Cod-B) à partir dudit code public (Cod-A) ;
- associer à chaque bac (2) un transpondeur (7) contenant ledit code public (Cod-A) et ledit code privé crypté (Cod-B), ou
- coder ledit code public (Cod-A) et ledit code privé crypté (Cod-B) dans un code-barres et associer le code-barres audit bac (2) ;
- et
lors de la validation d'un bac (2) ;
- lire le code public (Cod-A) et le code privé crypté (Cod-B) présents dans ledit bac (2) ;
- décrypter le code privé (Cod-B) à partir du code public (Cod-A) ;
- comparer le code privé décrypté (Cod-B) avec ledit code public (Cod-A) et vérifier si le code privé décrypté (Cod-B) et le code public (Cod-A) satisfont entre eux une relation de contrôle prédéfinie,
- signaler une condition d'absence de validation du bac (2) quand ladite relation de contrôle prédéfinie n'est pas satisfaite.

11. Procédé selon la revendication 10, comprenant l'étape de stockage dudit code public (Cod-A) et dudit code privé (Cod-B) dans, respectivement, une zone mémoire non réinscriptible (13a) et une zone mémoire réinscriptible (13b) de moyens de mémoire (13) dudit transpondeur (7).

12. Procédé selon la revendication 10, comprenant l'étape suivante : écrire/stocker de façon irréversible le code privé (Cod-B) dans la zone mémoire réinscriptible (13b) pour bloquer/empêcher toute réécriture/ modification successive de celle-ci.

13. Procédé selon l'une quelconque des revendications 10 à 12, dans lequel ledit code privé (Cod-B) comprend une chaîne alphanumérique comprenant des données d'information indicatives dudit code public (Cod-A) et/ou du type de bac (2), et/ou de la capacité volumétrique du bac (2) et/ou du type de déchets prévus pour être stockés dans le bac (2) et/ou de l'emplacement géographique du bac (2) et/ou du consortium/société de collecte d'ordures prévu pour gérer la collecte d'ordures au moyen dudit bac (2) et/ou des données d'identification de l'utilisateur du bac (2).

14. Procédé selon l'une quelconque des revendications 10 à 13, comprenant : une détermination du code privé (Cod-B) en fonction desdites données d'information, crypter le code privé (Cod-B) au moyen d'un algorithme de cryptage à partir du code public (Cod-A) lu et, pour finir, une écriture du code privé (Cod-B) dans la zone mémoire (13b) du transpondeur (7).
